Europäisches Patentamt

European Patent Office

Office européen des brevets

(11) Numéro de publication: **0 384 867**

**A1**

# DEMANDE DE BREVET EUROPEEN

(21) Numéro de dépôt: 90430004.3

(51) Int. Cl.5 **A01G 25/09**

(22) Date de dépôt: **02.02.90**

(30) Priorité: **24.02.89 FR 8902626**

(43) Date de publication de la demande:
**29.08.90 Bulletin 90/35**

(84) Etats contractants désignés:
**AT BE CH DE DK ES GB GR IT LI NL SE**

(71) Demandeur: **Société Anonyme dite: IRRIFRANCE-COFADSI**

**F-34240 Paulhan(FR)**

(72) Inventeur: **Perroud, Bruno**
**11, rue Déodora**
**F-31400 Toulouse(FR)**
Inventeur: **Rouquayrol, Claude**
**Chemin de Cassan**
**F-34320 Roujan(FR)**
Inventeur: **Guilhem, Jean-Claude**
**Chemin du Thau**
**F-34230 Paulhan(FR)**

(74) Mandataire: **Moretti, René et al**
**c/o Cabinet BEAU DE LOMENIE**
**"Prado-Mermoz" 232, Avenue du Prado**
**F-13008 Marseille(FR)**

(54) Machine d'irrigation automatique comportant une bobine entraînée par un vérin hydraulique et un ordinateur qui règle la cadence du vérin.

(57) L'invention a pour objet des machines d'irrigation automatiques comportant une bobine entraînée par un vérin hydraulique et un ordinateur qui règle la cadence du vérin.

Une machine selon l'invention comporte un canon d'arrosage (3) placé à l'extrémité d'un tuyau flexible (1) qui s'enroule sur une bobine (2) entraînée en rotation par un vérin souple (12) qui actionne un bras pivotant (13) portant un doigt (15) qui coopère avec des trous régulièrement espacés situés dans une couronne (31). La machine comporte un ordinateur (18). Elle comporte un premier capteur (30) de déplacement angulaire de la bobine situé à proximité de la couronne (31). Elle comporte un capteur (40) de la pression à l'entrée de la machine. L'ordinateur est programmé pour calculer la vitesse théorique de déplacement de l'appareil (3) en fonction de la hauteur d'eau à distribuer et du débit qui est calculé à partir de la pression ou qui est mesuré et pour calculer a durée théorique du cycle du vérin.

Une application est la construction de machines d'irrigation automatiques permettant d'obtenir plusieurs hauteurs d'eau différentes au cours d'un même arrosage.

# FIG.1

# Machine d'irrigation automatique comportant une bobine entraînée par un vérin hydraulique et un ordinateur qui règle la cadence du vérin.

La présente invention a pour objet des machines d'irrigation automatique comportant une bobine entraînée par un vérin hydraulique et un ordinateur qui règle la cadence du vérin.

Le secteur technique de l'invention est celui de la construction des machines d'irrigation automatiques.

On connaît des machines d'irrigation comportant un tuyau flexible à l'extrémité duquel est monté un appareil d'arrosage mobile par exemple une rampe d'arrosage ou un canon à eau montés sur un chariot.

Le tuyau s'enroule sur une bobine à axe horizontal portée par un châssis attelable derrière un tracteur. La bobine est entraînée en rotation par une turbine ou par un vérin hydraulique alimenté par l'eau d'irrigation.

La demande de brevet FR. A. 2.442.007 (ROSENQVIST) décrit une machine d'irrigation automatique dont la bobine est entraînée par une turbine.

Cette machine comporte une dynamo tachymétrique qui délivre un signal proportionnel à la vitesse de rotation de la turbine qui est envoyé sur un régulateur qui maintient cette vitesse constante.

Cette régulation ne tient pas compte des variations de débit et ne permet pas de faire varier la dose d'eau en cours d'arrosage.

Le brevet AT.B. 384.347 (BAUER) décrit une machine d'arrosage automatique comportant une bobine entraînée en rotation par une turbine qui entraîne également, par l'intermédiaire d'une transmission à chaîne, une roue dentée qui actionne un interrupteur qui transmet des impulsions à un ordinateur qui calcule la vitesse de déplacement de l'appareil d'arrosage et qui ajuste la vitesse de rotation de la turbine pour maintenir constante la vitesse de déplacement de l'appareil d'arrosage.

La régulation de vitesse décrite dans ce document ne prend pas en compte les variations du débit d'eau et ne permet pas d'ajuster la dose d'eau distribuée.

On connaît également des machines d'irrigation automatiques dans lesquelles la bobine est entraînée en rotation par un vérin, notamment par un vérin déformable constitué par un soufflet cylindrique en élastomère, lequel vérin actionne alternativement un bras pivotant dont l'extrémité libre porte un doigt ou un cliquet qui coopère avec des trous ou des encoches ou des dents régulièrement espacées qui sont situées à la périphérie de la bobine.

Dans les machines de ce type connu, l'admission d'eau dans le vérin et la vidange de celui(ci sont commandées par un distributeur dit hydrobasculeur qui est commandé mécaniquement par des butées portées par une tige solidaire du bras pivotant. Ce type de commande permet d'obtenir une vitesse de rotation constante ou une vitesse de rotation qui varie en fonction du nombre de spires de tuyau enroulées sur le tambour de la bobine pour maintenir constante la vitesse linéaire de déplacement de l'appareil d'arrosage.

L'objectif de la présente invention est de procurer des machines de ce type plus perfectionnées, qui permettent de distribuer une dose d'eau prédéterminée malgré les variations du débit d'eau délivré par l'appareil d'arrosage et qui permettent, notamment, de prédéterminer la dose d'eau à distribuer et de faire varier très facilement celle-ci en fonction des conditions climatiques, de la nature des terrains ou des cultures et même de distribuer plusieurs hauteurs d'eau différentes au cours d'un même cycle d'arrosage.

Dans le cas où l'appareil d'arrosage est un canon pivotant, un objectif de la présente invention est de procurer une machine qui permet de corriger facilement les déficits d'arrosage en début et en fin d'une bande arrosée en augmentant la dose d'eau aux deux extrémités.

Une machine selon l'invention est du type connu comportant une bobine qui est entraînée en rotation par un vérin déformable qui déplace alternativement un bras pivotant portant, à son extrémité libre, un doigt qui coopère avec des trous régulièrement répartis sur une couronne concentrique avec ladite bobine.

Les objectifs de l'invention sont atteints au moyen d'une machine de ce type comportant un ordinateur pourvu d'une mémoire et d'un clavier, un premier capteur de déplacement angulaire de la bobine qui est situé à proximité de ladite bobine et qui envoie audit ordinateur une impulsion au passage de chacun des trous et un capteur qui envoie audit ordinateur un signal proportionnel à la pression d'eau ou au débit à l'entrée de ladite machine et ledit ordinateur est programmé pour calculer à tout instant une vitesse d'enroulement théorique permettant de distribuer tout au long d'une bande de terrain une hauteur d'eau prédéterminée en tenant compte du débit instantané mesuré ou calculé à partir de la pression à l'entrée et pour calculer, d'une part, la longueur de tuyau enroulée au cours de chaque cycle aller-retour du vérin en fonction du nombre de couches de tuyau déjà enroulées sur le tambour de la bobine et la durée théorique du cycle aller-retour du vérin correspondant à ladite vitesse théorique moyenne et l'ordinateur règle la durée des cycles aller-retour dudit vérin pour qu'elle soit constamment égale à ladite durée théorique.

Une machine selon l'invention comporte un distributeur hydraulique à trois voies : une voie d'entrée qui est connectée à un tuyau d'arrivée d'eau à ladite machine, une voie de sortie qui est connectée sur l'ouverture dudit vérin déformable et une voie de vidange, lequel distributeur hydraulique comporte un clapet qui est relié par une tige à une membrane déformable, qui divise une chambre de pilotage en un compartiment supérieur et un compartiment inférieur qui communique avec ladite voie d'entrée et elle comporte, en outre, une électrovanne bistable commandée par des impulsions émises par ledit ordinateur, laquelle électrovanne comporte trois voies : deux premières voies qui sont connectées respectivement à chacun des deux compartiments de ladite chambre et une troisième voie de vidange et ledit ordinateur commande le début d'un nouveau cycle dudit vérin en envoyant sur ladite électrovanne une impulsion qui place celle-ci sur une première position stable où les deux premières voies communiquent entre elles.

Dans le cas où la machine comporte un capteur de la pression d'eau placé à l'entrée de la machine, l'ordinateur est programmé pour calculer les pertes de charge dans la machine et dans le tuyau flexible en fonction de la longueur de tuyau totale et de la longueur déroulée, pour calculer la pression d'eau la buse de l'appareil d'arrosage et pour calculer le débit d'eau en fonction de ladite pression à la buse et des caractéristiques géométriques de la buse de l'appareil d'arrosage et pour calculer également la portée d'un canon d'arrosage pivotant.

Avantageusement, une machine selon l'invention comporte un deuxième capteur de déplacement angulaire de la bobine qui envoie audit ordinateur une impulsion au passage de plots métalliques montés uniformément répartis sur la périphérie d'un disque solidaire de l'axe de ladite bobine, le nombre desdits plots étant égal au nombre de trous ou un sous-multiple ou un multiple entier de celui-ci, et ledit ordinateur est programmé pour calculer, à partir de ces impulsions, la longueur totale de flexible réellement enroulée depuis le début d'un cycle d'arrosage et pour la comparer périodiquement à la longueur théorique qui aurait dû être enroulée et d'après les vitesses théoriques calculées et si la longueur réelle est supérieure à la longueur théorique d'une quantité supérieure à un seuil l'ordinateur met la machine en attente jusqu'à ce que la longueur théorique atteigne la longueur réelle et si la longueur réelle est inférieure à la longueur théorique d'une quantité supérieure à un seuil déterminé, l'ordinateur réduit la durée de cycle théorique jusqu'à ce que le retard soit résorbé.

L'invention a pour résultat de nouvelles machines d'irrigation qui permettent d'arroser automatiquement une bande de terrain en distribuant une hauteur d'eau constante malgré les variations du débit d'eau de l'appareil d'arrosage dû à des variations de pression et en tenant compte du nombre de couches de spires enroulées sur le tambour de la bobine.

Une machine selon l'invention permet de programmer la distribution de hauteurs d'eau différentes le long d'une bande en cours d'arrosage en fonction de la longueur de tuyau déroulée, laquelle est calculée à partir des signaux délivrés par le premier capteur de déplacement angulaire de la bobine.

Une machine selon l'invention équipée d'un canon pivotant permet notamment de programmer la distribution de hauteurs d'eau plus grandes au début et à la fin d'une bande pour compenser les déficits inhérents à l'utilisation d'un canon pivotant.

Une machine selon l'invention permet de programmer une durée maxima d'arrosage, de sorte que l'utilisateur sait que l'arrosage d'une bande de terrain sera terminé à une heure prédéterminée et il connaît donc l'heure à laquelle il pourra venir déplacer la machine.

Une machine selon l'invention permet également de fixer une dose d'eau minima et de programmer l'ordinateur pour qu'il respecte en priorité, soit la durée maxima, soit la dose minima.

La description suivante se réfère aux dessins annexés qui représentent, sans aucun caractère limitatif, un exemple de réalisation d'une machine d'irrigation automatique selon l'invention.

La figure 1 est une vue d'ensemble en élévation d'une machine selon l'invention.

La figure 2 est une coupe axiale d'un distributeur hydraulique équipé d'une électrovanne pilote bistable commandant l'arrivée d'eau au vérin déformable et la vidange de celui-ci.

La figure 3 est une vue partielle de la couronne solidaire de la bobine et d'un capteur de déplacement angulaire.

La figure 4 est une vue d'un tube aplati enroulé sur le tambour de la bobine.

Les figures 5 et 6 sont des vues d'une machine en position de début d'arrosage d'une bande.

La figure 7 est un tableau synoptique montrant un organigramme d'une partie du programme de l'ordinateur pour le calcul de la vitesse théorique $V_t$ de déplacement de l'appareil d'arrosage.

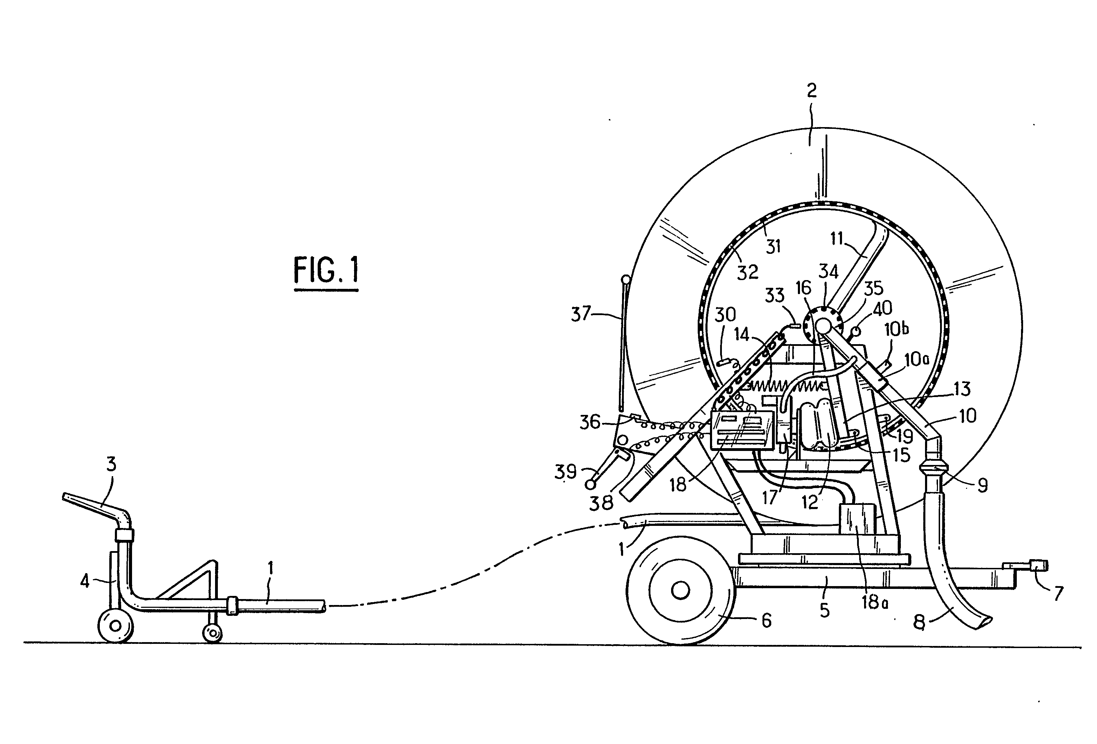

La figure 1 représente une machine d'irrigation selon l'invention.

Cette machine comporte un tuyau d'arrosage flexible 1 qui s'enroule sur une bobine 2 à axe horizontal et qui est équipé, à son extrémité, d'un organe d'arrosage qui est par exemple un canon 3 monté sur un chariot 4 mais qui peut également être une rampe perforée transversale.

Dans tous les cas, l'organe d'arrosage arrose une bande de terrain de largeur E qui varie en fonctionde la pression pour un canon.

La bobine 2 est montée sur un châssis 5 pourvu de roues 6 et d'un timon 7 permettant de l'atteler derrière un tracteur.

L'eau d'irrigation qui alimente la machine arrive par un tuyau flexible 8 qui est connecté sur un raccord d'entrée 9, placé à l'extrémité d'un tube 10 qui est connecté par un joint tournant sur l'axe creux de la bobine.

Un tube 11 relie l'axe creux à l'extrémité du tube 1 enroulé sur la bobine.

Au début d'un cycle d'arrosage d'une bande de terrain, on place le châssis 5 à une extrémité de cette bande et on déroule une longueur déterminée de tube 1, par exemple en le tirant avec un tracteur, pour amener l'organe d'arrosage 3 à l'autre extrémité de la bande de terrain.

On ouvre ensuite l'arrivée d'eau. La bobine 2 est entraînée en rotation à vitesse très lente par un moteur hydraulique mû par l'eau d'arrosage.

La rotation de la bobine provoque l'enroulement du flexible 1 qui ramène automatiquement l'organe 3 vers la bobine en arrosant une bande de terrain ayant une largeur E égale à deux fois la portée du canon d'arrosage 3 et une longueur égale ou légèrement supérieure à la longueur du tuyau déroulée.

La figure 1 représente une machine équipée d'un moteur hydraulique constitué par un vérin souple à simple effet 12 qui est un cylindre déformable en élastomère en forme de soufflet.

Une extrémité du vérin est appuyée contre une butée fixe solidaire du châssis 5.

L'autre extrémité est appuyée contre un bras mobile 13 dont une extrémité pivote autour d'une articulation. Le bras mobile est rappelé vers sa position par un ressort 14.

L'extrémité libre du bras mobile, c'est-à-dire l'extrémité opposée à l'articulation, porte un doigt ou cliquet 15 qui s'engage dans des trous ou encoches régulièrement espacés situés sur une couronne solidaire de la bobine de la périphérie de la bobine.

L'eau d'irrigation qui alimente le vérin est prélevée par une canalisation 16 connectée sur le tube 10 et passe dans un distributeur hydraulique 17 qui est piloté hydrauliquement par une électrovanne à impulsions de courant qui est une électrovanne bistable, à trois voies, commandée par des impulsions émises sous le contrôle d'un mini-ordinateur 18.

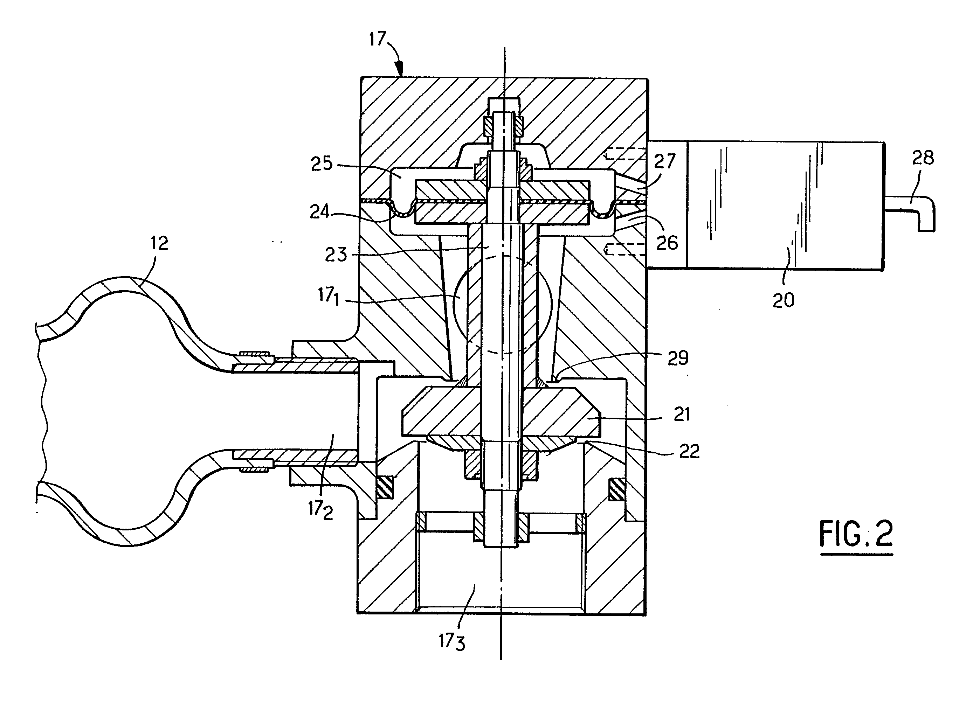

Le distributeur et l'électrovanne seront décrits en détail en référence à la figure 2.

L'électrovanne et le calculateur sont alimentés par une batterie d'accumulateurs 18a.

Lorsque l'eau est envoyée dans le vérin 12, il se gonfle et le doigt 15 pénètre dans un des trous situés à la périphérie de la bobine et il entraîne la bobine en rotation dans le sens inverse des aiguilles d'une montre.

Lorsque le vérin est mis en vidange, il se dégonfle et le bras mobile est ramené à sa position e départ par le ressort 16.

Pendant le mouvement de retour du bras mobile, le doigt 12 s'efface automatiquement et un cliquet anti-retour 19 qui s'engage dans une des encoches de la périphérie de la bobine empêche celle-ci de revenir en arrière.

La figure 2 est une coupe axiale du distributeur hydraulique 17.

On retrouve sur cette figure une extrémité du vérin souple 12 et l'électrovanne à trois voies 20 qui commande hydrauliquement le distributeur.

Le distributeur 17 comporte trois voies : une voie d'arrivée d'eau $17_1$ qui est connectée à la canalisation 16, une voie de sortie $17_2$ qui est connectée au vérin souple et une voie de vidange $17_3$.

Il comporte un clapet 21 qui coopère avec un siège 22 situé à l'entrée de la voie de vidange $17_3$.

Le clapet 21 est monté sur une tige 23 qui le relie à une membrane de pilotage déformable 24 qui sépare une chambre de pilotage 25 en deux compartiments. Chacun des compartiments de la chambre 23 communique avec un petit conduit, respectivement 26 et 27, lesquels conduits sont connectés sur deux des voies de l'électrovanne 20. L'électrovanne comporte une troisième voie qui communique avec un orifice de purge 28.

Le fonctionnement est le suivant.

Au début d'un cycle l'ordinateur central envoie une impulsion sur l'électrovanne 20, qui met en communication les voies 26 et 27. La pression de l'eau qui arrive par la voie $17_1$ s'exerce alors sur les deux faces de la membrane 24. La pression de l'eau qui s'exerce également sur la face supérieure du clapet 21 ferme celui-ci. L'eau pénètre dans le vérin qui se gonfle et le bras pivotant entraîne la bobine;

Après un certain temps qui est déterminé par l'ordinateur central comme nous l'expliquerons ci-après, l'ordinateur envoie une nouvelle impulsion sur l'électrovanne 20 qui passe sur sa deuxième position stable où la voie 27 communique avec la voie de purge 28. Le compartiment supérieure de la chambre de pilotage 25 se vide. La membrane 24 a une surface mouillée supérieure à celle du clapet 21 et la différence entre les poussées de l'eau sur la membrane et sur le piston repousse la membrane vers le haut contre un

4

siège 29.

L'arrivée d'eau 17₁ est alors isolée. Par contre, les voies 17₂ et 17₃ communiquent et le vérin 12 se vide et se dégonfle sous l'effet du ressort de rappel 14.

On connaît déjà des machines d'irrigation automatiques du type qui vient d'être décrit, mais non pourvue d'un ordinateur. Dans ces machines connues, les cycles de gonflage et de dégonflage du vérin déformable, sont commandés par des contacts de fin de course actionnés par le levier basculant, de sorte qu'il n'est pas possible de faire varier facilement la durée des cycles du vérin et donc la vitesse de rotation de la bobine pour tenir compte des variations du débit d'eau sortant du canon d'arrosage 3,lequel débit dépend du diamètre de l'orifice mais également des variations de la pression d'alimentation à l'entrée de la machine et des variations de perte de charge en fonction de la longueur du tuyau déroulée, qui varie tout au long d'un cycle d'arrosage.

Dans les machines connues, il n'est pas non plus possible de faire varier la vitesse de rotation de la bobine pour régler la dose d'eau, c'est-à-dire la hauteur d'eau distribuée ni le temps total d'arrosage.

Une machine selon l'invention est équipée d'un mini-ordinateur embarqué sur la machine et de moyens qui permettent de faire varier la durée des cycles du vérin déformable et donc également la vitesse de rotation de la bobineen fonction de nombreux paramètres, notamment des variations de la pression d'eau, des doses que l'on désire distribuer, et du temps maximum d'arrosage que l'on désire respecter. Ces moyens permettent également de faire varier la dose d'eau distribuée le long d'une bande de terrain en cours d'arrosage en fonction des cultures ou de la nature du sol.

Une machine selon l'invention comporte un capteur 30 de déplacement angulaire de la bobine.

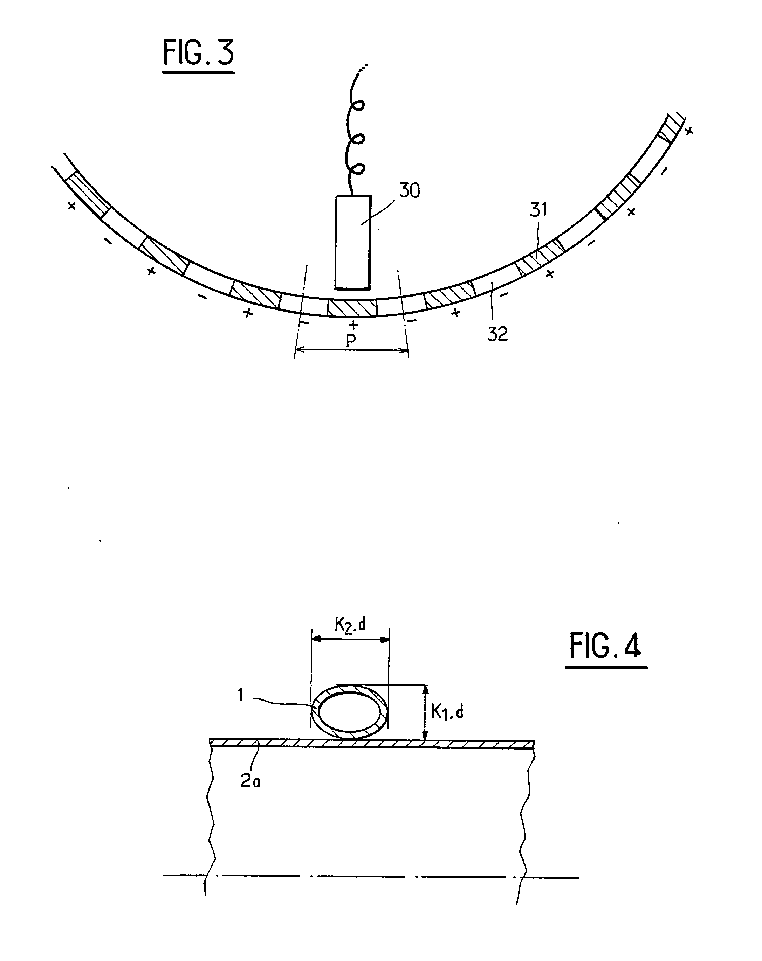

La figure 3 représente une partie d'une couronne métallique 31 qui est solidaire de la bobine 2 et concentrique avec celle-ci et qui comporte une pluralité de trous ou encoches 32 régulièrement espacés. Elle représente un capteur de déplacement 30 qui est par exemple un détecteur de masse métallique placé à proximité de la couronne 31 et qui émet un signal + lorsqu'il se trouve en face d'un intervalle entre deux trous et un signal - lorsqu'il se trouve en face d'un trou 32.

Avantageusement, les trous 32 sont ceux dans lesquels s'engage le doigt 15 porté par le bras mobile 13. Ces trous ont une forme adaptée à celle du doigt. De préférence, les intervalles entre trous ont une longueur sensiblement égale à la longueur des trous et le pas, c'est-à-dire la distance entre les axes de deux trous, est inférieur à la demi-course du doigt 15.

Une machine selon l'invention comporte un deuxième capteur de déplacement angulaire 33, qui est avantageusement identique au capteur 30 et qui émet des impulsions correspondant au défilement devant le capteur 33 de plots métalliques équidistants 34 portés par un disque 35 solidaire de l'axe de la bobine 2. Le nombre de plots 34 est soit égal au nombre de trous 32, soit un multiple entier ou un sous-multiple entier de ce nombre.

La machine comporte, en outre, un interrupteur 36 dont le contact est actionné par un bras articulé 37 qui s'appuie sur les spires du tuyau flexible enroulé sur la bobine. Dans le cas où les spires s'enroulent en se chevauchant le bras 37 actionne l'interrupteur 36 qui envoie un signal à l'ordinateur 18 et celui-ci arrête automatiquement la machine.

La machine comporte, en outre, de façon connue un interrupteur 38 actionné par un levier 39. Lorsque le chariot 4 portant l'asperseur 3 arrive en fin de course il actionne le levier 39 et l'interrupteur 38 envoie un signal à l'ordinateur.

L'ordinateur comporte un clavier qui permet d'entrer des données dans l'ordinateur.

Lorsque le calculateur est installé sur une machine déterminée, le constructeur connaît le diamètre d et la longueur totale L du tuyau flexible 1, le diamètre D et la largeur e du tambour de la bobine 2 et le nombre N de trous 32 pratiqués dans la couronne 31 et il entre ces données dans la mémoire de l'ordinateur.

L'ordinateur 18 comporte un programme de calcul de la longueur de flexible enroulé sur le tambour de la bobine 2 tenant compte de l'ovalisation du tuyau qui prend une forme ovalisée lorsqu'il est enroulé.

Le tuyau s'aplatit, de telle sorte que, dans le sens radial, son épaisseur devient égale à K1.d et dans le sens transversal à K2.d comme on le voit sur la figure 4 qui représente une coupe d'une spire du tuyau 1 enroulé sur le tambour 2a de la bobine 2.

K1 et K2 sont des coefficients constants qui sont connus pour un tuyau flexible de nature, d'épaisseur et de diamètre déterminés ou qui peuvent être mesurés.

Le nombre de spires de chaque couche est le même et il est égal à :

$$\frac{e}{K_2 \cdot d}$$

Le nombre de trous 32 correspondant à chaque couche est également le même et il est égal à :

$$N1 = \frac{e}{K_2 . d} \times N$$

Le diamètre moyen des spires de la première couche est égal à $D + K_1.d$ et la longueur totale L1 de flexible enroulée sur la première couche est donc égale à :

$$L_1 = (D + K_1 d).\pi. \frac{e}{K_2 d}$$

Pour la première couche, à chaque pas p d'entraînement de la bobine correspond une longueur de flexible enroulé égale à :

$\frac{M_1}{\eta} + (D + K_1.d) \frac{\pi}{\eta}$

Le diamètre moyen des spires de la deuxième couche est égal à $D + 3K1.d$.

La longueur totale L2 de flexible enroulée sur la deuxième couche est égale à :

$$L_2 = (D + 3K_1 d).\pi. \frac{e}{K_1 . d}$$

Pour la deuxième couche la longueur de flexible enroulé pour chaque pas d'entraînement de la bobine est égale à :

$(D + 3K_1 d) \times \frac{\pi}{\eta}$

De même pour la troisième couche la longueur totale de la couche est :

$$L3 = (D + 5K_1 d).\pi. \frac{e}{K_2 d}$$

et la longueur de flexible enroulé correspondant à chaque pas d'entraînement de la bobine est égale à :

$(D + 5K_1 d) \times \frac{\pi}{\eta}$

Connaissant la longueur totale L du flexible et la longueur de chaque couche, l'ordinateur détermine le nombre de couches d'enroulement et la longueur totale de la dernière couche qui est incomplète.

Ainsi, l'ordinateur connaît à tout instant le nombre de trous 32 qui ont défilé devant le capteur 30 grâce aux impulsions qui lui sont transmises par celui-ci et grâce au programme de calcul explique ci-dessus, il calcule à tout instant quelle est la longueur de tube enroulée et, par différence avec la longueur totale quelle est la longueur de tube déroulée.

Le diamètre d du flexible et la longueur totale L peuvent varier au cours de l'utilisation d'une machine chaque fois que l'utilisateur remplace le flexible.

L'utilisateur peut alors reprogrammer ou faire reprogrammer sa machine en remplaçant seulement les valeurs de d et de L enregistrées au départ par de nouvelles valeurs, le programme de calcul restant inchangé.

On a vu que le deuxième capteur 33 détectait le passage de plots métalliques 34 dont le nombre est un multiple ou un sous-multiple entier du nombre de trous 32.

Il y a donc une relation directe entre le nombre d'impulsions émises par les deux capteurs et l'ordinateur calcule également pour chaque couche d'enroulement la longueur de flexible enroulé entre deux impulsions successives émises par le capteur 33.

Le calculateur 18 comporte une base de temps constituée par une horloge électronique, ce qui lui permet d'établir la relation espace temps, c'est-à-dire de calculer des vitesses d'enroulement en divisant la longueur d'enroulement entre deux impulsions successives par la durée qui s'est écoulée entre ces deux impulsions.

Connaissant à chaque instant la longueur de tube déroulée, le calculateur peut calculer la vitesse d'enroulement théorique pour répondre à certains critères par exemple pour maintenir la dose d'arrosage constante malgré les variations de la pression d'eau au canon d'arrosage ou pour faire varier la dose d'arrosage pendant l'arrosage d'une bande. L'ordinateur compare ensuite la vitesse d'enroulement réelle mesurée à la vitesse théorique et il agit automatiquement sur l'électrovanne 20 pour modifier la vitesse moyenne d'enroulement.

La course du vérin 12 et le nombre N de trous 32 sont déterminés de telle sorte que chaque course du vérin corresponde à un nombre entier de pas entre trous 32.

Au cours de chaque cycle du vérin, celui-ci est maintenu un certains temps en position dégonflée, la bobine étant alors immobile et le capteur 30 qui se trouve en face d'un intervalle 31 entre deux trous, délivre un signal +.

Si l'on désire que la bobine tourne d'un seul pas pour chaque cycle du vérin, il faut que la course du vérin soit supérieure à un pas et inférieure à deux pas.

Après avoir commandé l'électrovanne 20 pour gonfler le vérin, l'ordinateur enregistre la suite de signaux délivrés par le capteur 30 et il donne un ordre d'inversion de l'électrovanne 20 lorsqu'il a reçu du capteur 30 une séquence de signaux +,-,+,-.

Le vérin se dégonfle alors et la bobine est bloquée par le cliquet anti-retour 19 qui est placé de telle sorte que le capteur 30 se trouve alors devant l'intervalle 31 suivant et délivre un signal +.

Si on désire que la bobine tourne de deux pas au cours de chaque cycle du vérin, on programme l'ordinateur pour qu'il donne l'ordre d'inversion de l'électrovanne lorsqu'il a reçu du capteur 30 une séquence de signaux -,+,-,+,-.

On connaît le nombre de pas correspondant à la course du vérin choisie et l'ordinateur peut donc calculer les longueurs de flexible enroulées pour chaque course du vérin en utilisant le programme de calcul exposé ci-dessus qui donne la longueur enroulée pour chaque pas et en multipliant par le nombre de pas parcouru pour chaque course du vérin.

L'ordinateur calcule une vitesse de déroulement théorique Vt à partir des données qui lui sont transmises par le clavier au début d'un cycle d'arrosage.

A partir de cette vitesse théorique $V_t$ et des longueurs de flexible L1, L2, L3 etc.... enroulées pour chaque course du vérin et pour chaque couche, l'ordinateur calcule les durées théoriques T d'un cycle du vérin correspondant à chaque couche de spires enroulées sur le tambour.

La course aller-retour du vérin s'effectue dans un temps déterminé par les paramètres de construction.

Par construction, ce temps est plus court que la plus faible des durées théoriques T calculées par l'ordinateur.

Chaque cycle de fonctionnement du vérin commence lorsque l'ordinateur envoie à l'électrovanne 20 une impulsion qui commande le gonflage du vérin.

L'ordinateur mesure la durée qui s'écoule à partir de cet instant et il commande le début d'un nouveau cycle seulement après que la durée mesurée a atteint le temps théorique T.

Du fait que l'entraînement de la bobine par un vérin est un entraînement pas à pas, l'ordinateur agit non pas sur la vitesse instantanée de déplacement de l'organe d'arrosage mais sur la durée de chaque cycle du vérin, ce qui revient à déterminer une vitesse moyenne de déplacement de l'organe d'arrosage.

L'ordinateur totalise les impulsions délivrées par le deuxième capteur 33 et il calcule à partir de ces impulsions la longueur totale réelle de flexible enroulée depuis le début d'un cycle d'arrosage, en utilisant le programme de calcul exposé ci-dessus, qui permet de connaître la longueur de flexible enroulée correspondant à chaque intervalle entre deux impulsions, en tenant compte du nombre de couches déjà enroulées sur le tambour de la bobine.

Par ailleurs, à partir de la vitesse de déplacement théorique de l'organe d'arrosage qui a été calculée par l'ordinateur et du temps écoule depuis le début d'un cycle d'arrosage, l'ordinateur calcule à tout instant la longueur théorique qu'aurait dû parcourir l'organe d'arrosage.

L'ordinateur compare périodiquement ces deux longueurs. Si la longueur réelle est supérieure à la longueur théorique, d'une quantité supérieure à un seuil déterminé l'ordinateur met la machine en attente jusqu'à ce que la longueur théorique, qui croît avec le temps écoulé, atteigne la longueur réelle. Si la longueur réelle est inférieure à la longueur théorique, d'une quantité supérieure à un seuil déterminé, l'ordinateur augmente la fréquence des cycles de fonctionnement du vérin, c'es-à-dire qu'il réduit légèrement la durée de cycle théorique T jusqu'à ce que le retard soit résorbé.

Si la différence n'arrive pas à être résorbée et atteint une longueur prédéterminée, l'ordinateur arrête automatiquement l'alimentation en eau en provoquant la fermeture d'une vanne hydraulique 10a qui est placée sur le conduit 10.

La vanne hydraulique 10a est pilotée par une électrovanne a impulsion de courant 10b, analogue à l'électrovanne 20, qui est commandée par des impulsions de courant envoyées par l'ordinateur.

Le rôle du deuxième capteur 33 associé aux plots 34 portés par le disque 35 est de contrôler globalement la régulation de la durée des cycles du vérin et de la corriger au besoin.

Une machine selon l'invention comporte, en outre, soit un débitmètre placé sur l'arrivée d'eau qui mesure le débit d'eau et envoie la mesure à l'ordinateur, soit un capteur de pression 40 qui mesure la pression de l'eau P à l'entrée de la machine.

Dans ce dernier cas, l'ordinateur calcule le débit Q à partir de la mesure de pression mesurée.

L'utilisateur entre dans l'ordinateur le diamètre φ de la buse de l' appareil d'arrosage 3.

Soit P1 la pression de l'eau arrivant à la buse. L'ordinateur calcule le débit instantané Q en appliquant la formule :

$$Q = K3.\phi^2\sqrt{P1}$$

K3 est un coefficient constant qui dépend de la forme de la buse et qui est introduit dans l'ordinateur.

7

La pression P1 à la buse dépend de la perte de charge $\delta$P1 dans la machine, de la perte de charge $\delta$P2 dans le flexible et de la pression P à l'entrée selon la formule :

P = $\delta$P1 + $\delta$P2 + P1

L'ordinateur calcule les pertes de charge en fonction du débit Q et du diamètre d du tube d'après un programme de calcul utilisant les formules suivantes :

$\delta$P1 = Q $^{1,75}$. x k4

$\delta$P2 = Q$^{1,75}$xd$^{4,75}$(0,5L - 0,1 L1)

formules dans lesquelles k4 est un coefficient constant enregistré dans la machine, d est le diamètre intérieur du tuyau flexible 1, $L_1$ est la longueur de tuyau déroulée et L est la longueur total du tuyau.

Finalement, l'ordinateur calcule le débit Q en fonction de la pression d'entrée P en appliquant la formule :

P = P1 + $\delta$P1 + $\delta$P2

soit :

$$P = \frac{Q^2}{K^2_3 . \Phi^4} + Q^{1,75} . K_4 + [Q^{1,75} . d^{4,75} . (0,5L - 0,6L_1)]$$

A partir de ces calculs, l'ordinateur peut afficher sur un écran la pression P1 à la buse de l'appareil d'arrosage ainsi que le débit Q de celui-ci.

Pour l'utilisateur d'une machine automatique d'irrigation, il existe deux paramètres essentiels d'une part la dose d'eau distribuée, c'est-à-dire la hauteur d'eau apportée par unité de surface irriguée et, d'autre part, la durée totale d'un cycle d'arrosage car souvent l'utilisateur ne peut disposer de l'eau que pendant une durée déterminée ou bien il désire pouvoir déplacer sa machine vers une autre parcelle à une heure déterminée.

Soit $V_t$ la vitesse théorique de déplacement de l'appareil d'arrosage 3 exprimée en m/h.

Soit h la hauteur d'eau en mm distribuée.

Soit Q le débit en m³·h de l'appareil d'arrosage.

Soit E la largeur de la bande de terrain associée, c'est-à-dire deux fois la portée dans le cas d'un canon pivotant.

Ces paramètres sont reliés par la relation :

$$h = \frac{Q}{Vt . E}$$

Si l'on admet que E et Q sont constants, on peut calculer une vitesse constante V de déplacement du chariot pour obtenir une hauteur h donnée. Les appareils d'arrosage connus fonctionnent généralement sur cette base et ils comportent des moyens qui font varier la vitesse de rotation de la bobine 2, de telle sorte que la vitesse Vt reste constante et égale à une valeur déterminée à l'avance.

Dans ce cas, si le débit Q change au cours d'un arrosage, la vitesse ne change pas et la dose d'arrosage h varie.

Une machine selon l'invention permet de faire varier la vitesse Vt, c'est-à-dire la durée des cycles du vérin en fonction des variations du débit Q mesurées par un débitmètre ou calculées à partir d'une mesure de la pression d'eau P à l'entrée de la machine comme on l'a expliqué ci-dessus, de telle sorte que la dose d'eau h reste constante malgré les variations de débit qui sont dues soit à des variations de la pression d'eau à l'entrée de la machine, soit aux variations de perte de charge le long du tuyau flexible en fonction de la longueur de tuyau déroulée.

De plus, une machine selon l'invention permet également de faire varier la dose d'eau h distribuée en fonction de la position de l'appareil d'arrosage 3 le long d'une bande de terrain en cours d'arrosage.

En effet, l'ordinateur qui compte les impulsions délivrées par le capteur 30 calcule à tout instant la longueur de tube déroulée et connaît donc la position de l'appareil d'arrosage et l'ordinateur contient un programme qui permet à l'utilisateur, avant le début d'une course, d'entrer par le clavier des longueurs mesurées à partir de la bobine et des doses d'eau à distribuer qui peuvent varier par exemple en fonction de la nature des cultures ou des changements de terrain.

Dans le cas où l'appareil d'arrosage est un canon pivotant, l'utilisateur peut programmer la distribution d'une dose d'eau plus élevée sur une certaine longueur en début et en fin de parcelle pour compenser le déficit d'arrosage.

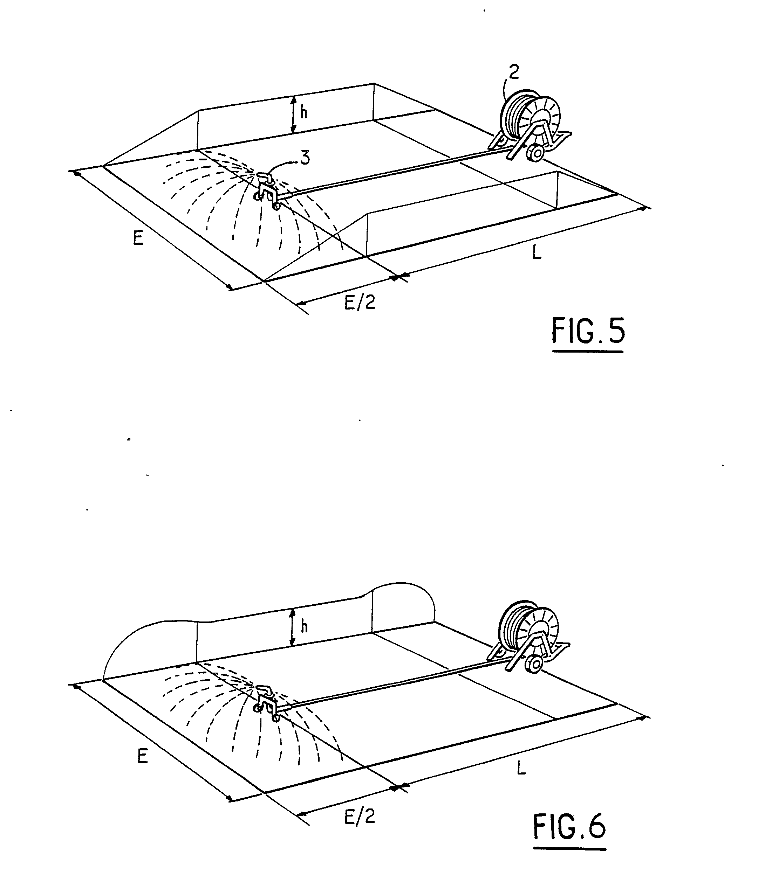

La figure 5 représente une machine selon l'invention comportant une bobine 2 et un canon d'arrosage 3 en début d'arrosage d'une bande de terrain de longueur L + E/2 et de largeur E, la portée du canon d'arrosage étant égale à E/2.

Au début de l'arrosage, la longueur de tuyau déroulée est égale à L.

On a représenté sur la gauche de la figure la hauteur d'eau distribuée h dans le cas où la vitesse de déplacement du canon 3 est constante. Dans ce cas, la hauteur h est constante sauf aux deux extrémités sur une longueur égale à E/2 où elle décroît progressivement jusqu'à zéro.

La figure 6 représente la même bande de terrain arrosée par une machine selon l'invention qui permet de programmer la distribution d'une dose h plus élevée en début et en fin de la bande pendant que le canon parcourt une distance sensiblement égale la moitié de la portée du canon.

Si par exemple L = 200 m et E = 40 m et si on désire distribuer trois litres d'eau par mètre carré, c'est-à-dire une hauteur de 3 mm, on programme la distribution de 4 mm d'eau entre 200 m et 180 m, puis la distribution de 3 mm d'eau entre 180 m et 20 m, puis à nouveau 4 mm d'eau dans les derniers 20 m du parcours.

Le graphique représenté sur la partie gauche de la figure montre que dans ce cas on distribue aux deux extrémités de la bande une dose d'eau compensée qui évite le déficit d'arrosage habituel.

En plus des variations du débit Q distribué par l'appareil d'arrosage, on peut tenir compte également des variations de la portée E/2 du canon d'arrosage dues aux variations de la pression de l'eau P1 à la buse du canon d'arrosage.

Le calculateur est programmé pour calculer la portée maxima réelle Er en utilisant une formule de la forme Er = P1 x K5, dans laquelle K5 est un coefficient constant qui dépend du diamètre de l'ajutage du canon.

Les valeurs du coefficient K5 ou bien les valeurs de la portée maxima correspondant à une pression déterminée, sont enregistrées dans la mémoire de l'ordinateur pour une série d'ajutage.

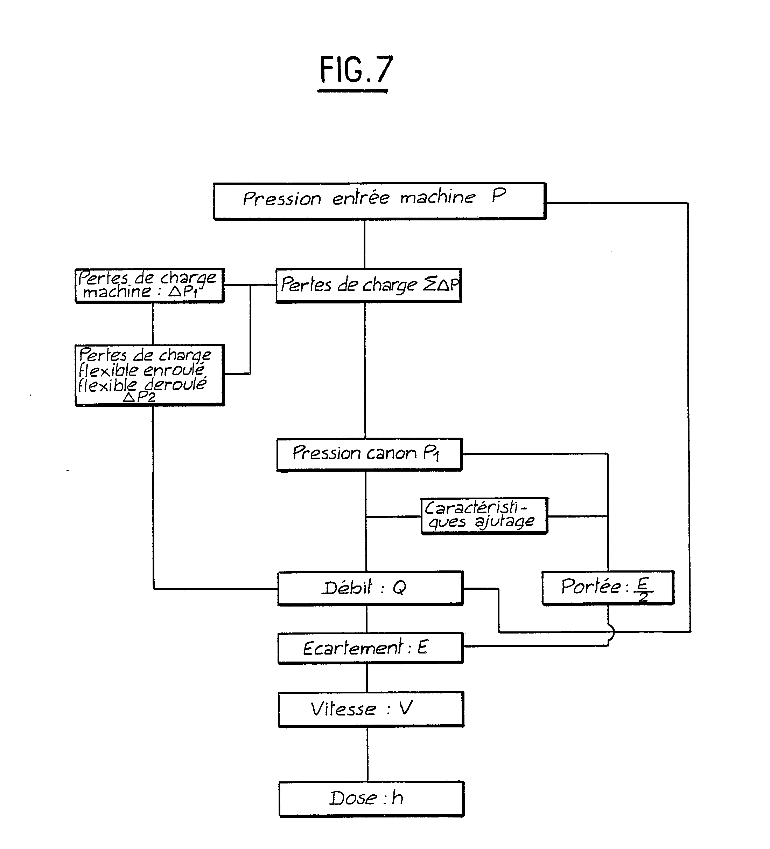

La figure 7 est un tableau qui montre les données entrées dans l'ordinateur et l'enchaînement des opérations effectuées par celui-ci.

On mesure la pression P à l'entrée de la machine et l'ordinateur calcule la perte de charge dans la machine $\delta P1$, la perte de charge dans le flexible $\delta P2$ et la perte de charge totale :

$$\Sigma\delta P = \delta P1 + \delta P2$$

à partir d'un débit théorique puis, par différence, la pression P1 au canon d'arrosage.

A partir des caractéristiques de l'ajutage du canon qui sont enregistrées dans l'ordinateur, celui-ci calcule le débit Q. Comme les pertes de charge dépendent du débit, on introduit les nouvelles valeurs du débit Q dans les formules de calcul des pertes de charge pour arriver à une valeur corrigée du débit.

Dans le cas où la machine comporte, en outre, un capteur de débit, le débit Q est transmis à l'ordinateur par le capteur.

L'ordinateur calcule la portée E/2 du canon en fonction de la pression P1 au canon et des caractéristiques de l'ajutage et il en déduit la largeur E de la bande arrosée.

En fonction de cette largeur calculée E et de la dose h demandée qui est introduite dans le calculateur et qui peut prendre plusieurs valeurs différentes h1, h2 ... le long d'une même bande en cours d'arrosage, l'ordinateur calcule pour chaque valeur de h, la vitesse théorique V correspondante en appliquant la formule :

$$V_t = \frac{Q}{h \cdot E}$$

Du fait que la bobine 2 est entraînée pas à pas par un vérin, la vitesse n'est pas un paramètre commode à utiliser.

L'ordinateur calcule la durée théorique T du cycle de fonctionnement du vérin à partir de la longueur de tuyau enroulée au cours de chaque cycle du vérin et de la vitesse calculée par l'ordinateur. Cette durée théorique varie, avec la couche sur laquelle se situe le tube enroulé sur le tambour. Elle varie également avec les paramètres dont dépend la vitesse théorique $V_t$ à savoir la hauteur d'eau désirée et la pression P à l'entrée de la machine qui conditionne le débit Q et également la portée du canon.

L'ordinateur compare continuellement la durée réelle des cycles de fonctionnement du vérin à la durée de consigne théorique T calculée et il commande l'électrovanne 20 lorsque ces durées sont égales.

Une machine selon l'invention permet de distribuer une dose d'eau constante et sensiblement uniforme malgré les variations de la pression d'eau.

Elle permet de programmer la hauteur d'eau et de modifier celles-ci, soit dans le temps en fonction de variations de climat saisonnières, soit dans l'espace en changeant la dose selon la nature des cultures ou des terrains. Elle permet de modifier la dose d'eau distribuée le long d'une même bande à arroser.

Une machine selon l'invention permet de distribuer une dose d'eau indépendante de l'influence des contraintes extérieures.

La dose distribuée est indépendante des variations de pression de l'eau qui sont prises en compte dans le calcul de la vitesse de consigne. La vitesse moyenne de déplacement du canon d'arrosage est imposée par la durée des cycles du vérin.

Il n'y a pas de variations de vitesse dues aux variations d'adhérence du terrain sur lequel se déplace le chariot 4 ou aux variations dues à l'étirement du flexible d'arrosage. Les variations de diamètre d'enroulement du flexible sur le tambour de la bobine sont prises en compte dans les calculs.

Le tableau de la figure 7 représente l'organigramme des sous-programmes des calculs effectués par l'ordinateur pour calculer la vitesse V, en fonction de la pression P mesurée à l'entrée de la machine. En variante, la machine peut comporter un débit-mètre qui mesure directement le débit Q.

Dans ce cas, l'ordinateur calcule à partir du débit mesuré et des caractéristiques de l'ajutage la pression au canon P1 en appliquant la formule :

$$P1 = \frac{Q^2}{K^2_3 . \Phi^4}$$

puis il calcule la portée E 2 du canon, la largeur de la bande arrosée E et la vitesse V.

Une machine selon l'invention permet d'entrer dans la mémoire une durée maxima d'arrosage et de programmer la machine pour qu'elle respecte en priorité cette durée maxima, de sorte que l'utilisateur est certain de pouvoir déplacer la machine à une heure prédéterminée, ce qui est très utile dans la pratique.

De même, une machine selon l'invention peut être programmée pour garantir une largeur de bande arrosée minima afin d'éviter que les bordures d'une bande ne soient mal arrosées en cas de chute de pression qui provoque une réduction de la portée du canon.

Dans ce cas, un seuil de pression minimum à la buse d'arrosage est enregistré dans l'ordinateur et si cette valeur est atteinte, l'ordinateur commande la vanne pilote 10b qui ferme la vanne hydraulique 10a.

Si la pression devient à nouveau supérieure au seuil, le calculateur transmet à nouveau un ordre d'ouverture à l'électrovanne 10b. La durée de l'interruption est alors enregistrée par le calculateur qui calcule une nouvelle vitesse théorique Vt de déplacement de l'appareil d'arrosage 3, telle que l'arrosage se termine en respectant la durée maxima fixée.

Bien entendu à cette nouvelle vitesse correspond une nouvelle dose distribuée qui est inférieure à celle qui avait été fixée au départ. Dans ce cas, l'impératif de durée maxima devient prioritaire par rapport à la dose d'eau consignée au départ.

Toutefois des limites peuvent être fixées à l'ordinateur. On peut par exemple fixer une dose d'eau minima compatible avec la vitesse maxima de la machine, c'est-à-dire avec une durée minima des cycles du vérin.

Tant que la dose d'eau théorique calculée par l'ordinateur pour respecter une heure de fin d'arrosage prédéterminée reste supérieure à la dose d'eau minima, la machine respecte en priorité la durée maxima fixée.

Si la dose théorique calculée par l'ordinateur devient inférieure à la dose minima, la machine respecte en priorité la dose minima et, dans ce cas, la durée de l'arrosage dépasse la durée maxima fixée au départ.

L'ordinateur qui équipe une machine selon l'invention peut être connecté par un circuit d'interface à un petit émetteur radio qui peut émettre un signal d'alarme. Dans ce cas, l'utilisateur est porteur d'un appareil radio récepteur. L'émetteur peut émettre un signal par exemple pour prévenir l'utilisateur pendant le déroulement du flexible que celui-ci est entièrement déroulé, ce qui permet à l'utilisateur d'arrêter le dévidement du tuyau et de risquer de l'arracher de la bobine.

L'ordinateur peut être équipé de prises d'entrées de données sur lesquelles on peut connecter des appareils de mesure. Par exemple on peut connecter sur cette prise un pluviomètre qui mesure la hauteur de pluie dans le cas où il se met à pleuvoir pendant un arrosage. Le pluviomètre est équipé d'un contact ou d'électrodes dont le niveau est réglable par l'utilisateur de la machine. Si ce niveau est atteint, le contact se ferme et l'ordinateur reçoit un signal. L'ordinateur est programmé pour enrouler alors le tuyau à vitesse maxima ou pour arrêter automatiquement l'arrosage.

De même, on peut connecter sur la prise d'entrée un anémomètre qui envoie un signal lorsqu'un seuil maximum de vitesse du vent est atteint. A la réception de ce signal, l'ordinateur arrête automatiquement l'arrosage afin d'éviter une mauvaise répartition de l'eau d'aspersion due au vent trop violent.

La figure 1 représente une machine équipée d'une vanne d'arrêt 10a qui permet de commander automatiquement l'arrêt et le démarrage de la machine.

EP 0 384 867 A1

En variante, la machine peut être équipée d'une vanne hydraulique identique, dite vanne de décharge montée sur une dérivation ouverte à l'atmosphère. Dans ce cas, lorsque l'ordinateur commande l'ouverture de la vanne de décharge, l'arrosage est interrompu et une dépression prend naissance dans le réseau de distribution d'eau alimenté par une pompe.La dépression remonte jusqu'à la pompe et elle agit sur un mano-contact ou capteur de pression qui commande automatiquement l'arrêt de la station de pompage.

**Revendications**

1. Machine d'irrigation automatique du type comportant un tuyau d'arrosage flexible (1) qui alimente un appareil d'arrosage (3) monté sur un chariot (4) et qui s'enroule sur une bobine (2) qui est entraînée en rotation par un vérin déformable (12), qui déplace alternativement un bras pivotant (13) portant à son extrémité libre un doigt (15) qui coopère avec des trous (32) régulièrement répartis sur une couronne (31) concentrique avec ladite bobine (3), caractérisée en ce qu'elle comporte un ordinateur (18) pourvu d'une mémoire et d'un clavier, un premier capteur de déplacement angulaire de la bobine (30) qui est située à proximité de ladite couronne et qui envoie audit ordinateur une impulsion au passage de chacun desdits trous et un capteur (40) qui envoie à l'ordinateur un signal proportionnel à la pression d'eau (P) ou au débit d'eau (Q) à l'entrée de la machine et ledit ordinateur est programmé pour calculer à tout instant une vitesse de déroulement théorique ($V_t$) permettant de distribuer tout au long d'une bande de terrain une hauteur d'eau (h) prédéterminée en tenant compte du débit instantané (Q) mesuré ou calculé à partir de la pression à l'entrée et pour calculer, d'une part, la longueur de tuyau enroulée au cours de chaque cycle aller-retour du vérin en fonction du nombre de couches de tuyau déjà enroulées sur le tambour de la bobine et d'autre part la durée théorique (T) du cycle aller-retour du vérin correspondant à ladite vitesse théorique et l'ordinateur règle la durée des cycles aller-retour dudit vérin pour qu'elle soit constamment égale à ladite durée théorique (T).

2. Machine selon la revendication 1, caractérisé en ce qu'elle comporte un distributeur hydraulique (17) à trois voies : une voie d'entrée ($17_1$) qui est connectée à un tuyau (10) d'arrivée d'eau à ladite machine, une voie de sortie ($17_2$) qui est connectée sur l'ouverture dudit vérin déformable (12) et une voie de vidange ($17_3$), lequel distributeur hydraulique comporte un clapet (21) qui est relié par une tige à une membrane déformable (24), qui divise une chambre de pilotage (25) en un compartiment supérieur et un compartiment inférieur qui communique avec ladite voie d'entrée ($17_1$) et elle comporte, en outre, une électrovanne bistable (20) commandée par des impulsions émises par ledit ordinateur (18), laquelle électrovanne comporte trois voies : deux premières voies (26, 27) à qui sont connectées respectivement à chacun des deux compartiments de ladite chambre (25) et une troisième voie de vidange (20) et ledit ordinateur commande le début d'un nouveau cycle dudit vérin en envoyant sur ladite électrovanne une impulsion qui place celle-ci sur une première position stable où les deux premières voies (26, 27) communiquent entre elles.

3. Machine selon l'une quelconque des revendications 1 et 2, comportant un capteur de pression d'eau (40) placé à l'entrée de la machine, caractérisée en ce que ledit ordinateur est programmé pour calculer les pertes de charge dans là machine ($\delta P1$) et dans le tuyau flexible ($\delta P2$) en fonction de la longueur de tuyau totale (L) et de la longueur déroulée (L1), pour calculer la pression d'eau (P1) et la buse de l'appareil d'arrosage (3) et pour calculer le débit d'eau (Q) en fonction de ladite pression à la buse (P1) et des caractéristiques géométriques de la buse de l'appareil d'arrosage et pour calculer également la portée (E/2) d'un canon d'arrosage pivotant.

4. Machine selon la revendication 2, caractérisée en ce que l'ordinateur est programmé pour envoyer à ladite électrovanne (20) une impulsion qui met en communication la voie (27), connectée au compartiment supérieur de la chambre (25) de pilotage du distributeur hydraulique, avec la voie de vidange (20), ce qui provoque la mise en vidange dudit vérin déformable (12) et le début du mouvement de retour du vérin lorsqu'il a reçu dudit capteur (30) une suite de signaux + et - déterminée en fonction du nombre de pas égaux à l'intervalle entre lesdits trous (32) que la bobine (2) doit parcourir au cours de chaque course aller-retour du vérin.

5. Machine selon l'une quelconque des revendications 1 à 4, caractérisée en ce qu'elle comporte un deuxième capteur (33) de déplacement angulaire de la bobine qui envoie audit ordinateur une impulsion au passage de plots métalliques (34) montés uniformément répartis sur la périphérie d'un disque (35) solidaire de l'axe de ladite bobine (2), le nombre desdits plots (34) étant égal au nombre de trous (32) ou un sous-multiple ou un multiple entier de celui-ci, et ledit ordinateur est programmé pour calculer, à partir de ces impulsions, la longueur totale de flexible réellement enroulée depuis le début d'un cycle d'arrosage et pour la comparer périodiquement à la longueur théorique qui aurait dû être enroulée d'après les vitesses

11

théoriques calculées et si la longueur réelle est supérieure à la longueur théorique d'une quantité supérieure à un seuil l'ordinateur met la machine en attente jusqu'à ce que la longueur théorique atteigne la longueur réelle et si la longueur réelle est inférieure à la longueur théorique d'une quantité supérieure à un seuil déterminé, l'ordinateur réduit la durée de cycle théorique jusqu'à ce que le retard soit résorbé.

6. Machine selon la revendication 3, caractérisée en ce que ledit ordinateur est programmé pour calculer la vitesse théorique ($V_t$) de déplacement de l'appareil d'arrosage (3) en appliquant la formule :

$$V_t = \frac{Q}{h \cdot E}$$

dans laquelle Q est le débit mesuré ou calculé, E est la largeur de bande arrosée qui est déterminée ou calculée à partir de la pression (P1) à la buse qui est elle-même calculée à partir du début mesuré (Q) ou à partir de la pression (P) mesurée à l'entrée et h est la hauteur d'eau désirée, laquelle est entrée dans la mémoire de l'ordinateur avant le début d'un arrosage, ce qui permet de faire varier ladite hauteur selon les conditions climatiques ou selon la nature des cultures ou des terrains et en particulier de programmer plusieurs hauteurs d'eau différentes le long d'une même bande de terrain arrosée en un seul passage de l'appareil d'arrosage et de compenser les déficits d'arrosage aux deux extrémités d'une bande lorsqu'on arrose avec un canon pivotant.

7. Machine selon la revendication 3, caractérisée en ce qu'elle comporte une vanne hydraulique d'arrêt (10a) qui est placée sur un tuyau (10) d'arrivée d'eau à la machine et qui est commandée par une électrovanne pilote (10b) qui est elle-même commandée par des impulsions transmises par ledit ordinateur.

8. Machine selon la revendication 7, caractérisée en ce que l'ordinateur est programmé pour comparer la pression d'eau (P1) à la buse d'arrosage à un seuil minimum, pour envoyer à ladite électrovanne pilote (10b) une impulsion de fermeture de ladite vanne d'arrêt (10a) si la pression (P1) tombe au-dessous dudit seuil et une impulsion d'ouverture de ladite vanne d'arrêt lorsque la pression remonte au-dessus dudit seuil.

9. Machine selon la revendication 8, caractérisée en ce que l'ordinateur est programmé pour respecter une durée maximum d'arrosage qui est entrée par l'utilisateur dans la mémoire dudit ordinateur avant un cycle d'arrosage et, dans le cas où la machine est arrêtée momentanément par suite d'une chute de pression au-dessous dudit seuil minimun, l'ordinateur enregistre la durée de cet arrêt momentané et calcule une nouvelle vitesse théorique de l'appareil d'arrosage telle que ladite durée maxima soit respectée.

10. Machine selon la revendication 9, caractérisée en ce que l'on entre dans la mémoire de l'ordinateur une dose d'eau minima à distribuer et l'ordinateur calcule la dose d'eau qui correspond à la nouvelle vitesse théorique qu'il a calculée et si cette dose est inférieure à ladite dose minima l'ordinateur respecte en priorité ladite dose d'eau minima.

11. Machine selon l'une quelconque des revendications 1 à 10, caractérisée en ce que ledit ordinateur est connecté à un émetteur radio qui émet un signal d'alarme en cas d'anomalie de fonctionnement de la machine.

12. Machine selon l'une quelconque des revendications 1 à 11, caractérisée en ce que ledit ordinateur comporte une prise d'entrée de données, sur laquelle est connecté un pluviomètre qui émet un signal en cas de chute d'une hauteur de pluie atteignant un niveau réglable et ledit ordinateur est programmé pour enrouler le tuyau à la vitesse maxima ou pour arrêter automatiquement l'arrosage lorsqu'il reçoit un signal dudit pluviomètre.

13. Machine selon l'une quelconque des revendications 1 à 12, caractérisée en ce qu'elle comporte un anémomètre qui est connecté sur une prise d'entrée de données dudit ordinateur et qui envoie audit ordinateur un signal lorsque la vitesse du vent dépasse un seuil déterminé et ledit ordinateur est programmé pour arrêter automatiquement l'arrosage lorsqu'il reçoit ledit signal.

FIG.1

EP 0 384 867 A1

FIG.2

## FIG. 3

## FIG. 4

FIG.5

FIG.6

# FIG.7

Pression entrée machine  P

Pertes de charge machine : $\Delta P_1$

Pertes de charge $\Sigma \Delta P$

Pertes de charge flexible enroulé, flexible déroulé $\Delta P_2$

Pression canon $P_1$

Caractéristiques ajutage

Débit : Q

Portée : $\frac{E}{2}$

Ecartement : E

Vitesse : V

Dose : h

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3049436 (BAUER)<br>* page 12, alinéa 3 - page 15, alinéa 4; revendications 1, 10; figures 1, 2 *<br>--- | 1, 6-11 | A01G25/09 |
| A | US-A-4445643 (THORSBY)<br>* colonne 3, ligne 25 - colonne 4, ligne 28 *<br>* colonne 10, ligne 42 - colonne 11, ligne 39 *<br>* colonne 15, lignes 54 - 66; figures 1, 6 *<br>--- | 1, 11 | |
| A | US-A-4488683 (CHIEL)<br>* colonne 4, ligne 39 - colonne 8, ligne 61; figures 1-5 *<br>----- | 1 | |

**DOMAINES TECHNIQUES RECHERCHES (Int. Cl.5)**

A01G

Le présent rapport a été établi pour toutes les revendications

| Lieu de la recherche | Date d'achèvement de la recherche | Examinateur |
|---|---|---|
| LA HAYE | 25 MAI 1990 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)